Europäisches Patentamt

European Patent Office

Office européen des brevets

(11) Veröffentlichungsnummer : **0 443 698 B1**

(12) **EUROPÄISCHE PATENTSCHRIFT**

(45) Veröffentlichungstag der Patentschrift :
01.06.94 Patentblatt 94/22

(51) Int. Cl.$^5$ : **C01B 3/00**

(21) Anmeldenummer : **91250034.5**

(22) Anmeldetag : **07.02.91**

(54) **Chemiesorptionsfähige Metallegierung und Verfahren zur Gasreinigung.**

(30) Priorität : **20.02.90 DE 4005695**

(43) Veröffentlichungstag der Anmeldung :
**28.08.91 Patentblatt 91/35**

(45) Bekanntmachung des Hinweises auf die
Patenterteilung :
**01.06.94 Patentblatt 94/22**

(84) Benannte Vertragsstaaten :
**DE ES FR GB IT**

(56) Entgegenhaltungen :
**DE-A- 2 701 893**
**DE-C- 3 210 381**
**SU-A- 194 527**
**K. Dies : "Kupfer und Kupferlegierungen in**
**der Technik, Springer Verlag, Heidelberg 1967**
**Seiten 622-623, 638-639.**

(73) Patentinhaber : **SAES GETTERS S.P.A.**
**Via Gallarate, 215**
**I-20151 Milano (IT)**

(72) Erfinder : **Bernauer, Otto, Dr. Dipl.-Phys.**
**Zillestrasse 20**
**W-4130 Moers (DE)**

(74) Vertreter : **Meissner, Peter E., Dipl.-Ing. et al**
**Meissner & Meissner,**
**Patentanwaltsbüro,**
**Postfach 33 01 30**
**D-14171 Berlin (DE)**

**Beschreibung**

Die Erfindung betrifft eine chemiesorptionsfähige Metallegierung, die Titan und/oder Zirkon sowie Kupfer enthält, und ein Verfahren zur Reinigung verunreinigter Gase durch Chemiesorption von Fremdgasbestandteilen in einer Metallpulverschüttung.

Aus der DE 32 10 381 C1 ist eine Legierung zum Speichern von Wasserstoff bekannt, die (in Gewichts-%) 25-30,9 % Ti, 10-42 % V, 27,1-65,1 % Mn und pro Ti-Atom bis zu 0,05 Cu-Atome enthalten kann, was einem Anteil an Kupfer von maximal etwa 2 % entspricht. Diese Legierung eignet sich grundsätzlich für die Reinigung von Wasserstoffgas in einem Schüttreaktor, wobei das in eine Pulverschüttung aus dieser Legierung geführte Wasserstoffgas unter Bildung eines Metallhydrids absorbiert wird, während andere Gasbestandteile zumindest keine nennenswerte Sorption erfahren. Nach weitgehender Beladung der Metallpulverschüttung mit Wasserstoff wird die Zufuhr von Rohgas unterbrochen und der Schüttreaktor erwärmt. Dadurch wird das im Metallhydrid gebundene Wasserstoffgas wieder freigesetzt. Nachdem in einer Anfangsphase zunächst die im Schüttreaktor enthaltenen Fremdgasbestandteile in Form des verunreinigten Kopfgases abgeblasen worden sind, wird im weiteren nur noch das gereinigte Wasserstoffgas aus dem Reaktor abgegeben.

Im Prinzip läßt sich ein derartiger Schüttreaktor auch einsetzen, wenn ein anderes Gas (z.B. Argon), in dem als Fremdgasbestandteil Wasserstoff enthalten ist, von diesem Wasserstoffanteil gereinigt werden soll. In diesem Fall wird das ungereinigte Gas in den Schüttreaktor geleitet und steht bereits unmittelbar nach Durchströmen des Schüttbettes als von Wasserstoff befreiter Gasstrom wieder zur Verfügung. Selbstverständlich muß das Schüttbett der Legierung in regelmäßigen Abständen einer Regenerierung seiner Wasserstoffspeicherkapazität unterzogen werden, indem es wie oben beschrieben erwärmt wird.

Hydridbildende Metallegierungen neigen in der Regel dazu, auch andere Gase aufzunehmen bzw. mit diesen Verbindungen einzugehen. Solche Verbindungen sind in bezug auf die übliche Regenerierung eines entsprechenden Schüttbettes für die Chemiesorption als irreversibel anzusehen, so daß die verwendete hydridbildende Metallegierung in derartigen Fällen schnell unbrauchbar wird. Dies gilt in ganz besonderem Maße für reaktive Sondergase wie Chlor, Chlorwasserstoff, Silan, Dichlorsilan und ähnliche Gase. Die Reinigung derartiger Sondergase ist mit den bekannten Legierungen bisher nicht möglich oder nicht zufriedenstellend durchführbar.

Die Aufgabe der Erfindung besteht daher darin, eine Legierung und ein Reinigungsverfahren anzugeben, die eine kostengünstige Reinigung reaktiver Sondergase ermöglichen.

Gelöst wird diese Aufgabe durch eine Schüttung einer pulverisierten Legierung mit den Merkmalen des Patentanspruchs 1 bzw. durch ein Verfahren mit den Merkmalen des Patentanspruchs 2.

Die erfindungsgemäße Legierung enthält Titan und/oder Zirkon in einer Menge von zusammen 30-70 % sowie Kupfer in einer Menge von 30-70 %; an Begleitelementen dürfen bis zu 5 % Eisen, bis zu 10 % Nickel, bis zu 5 % Vanadium und bis zu 5 % Chrom enthalten sein. Die Begleitelemente sind zur Erzielung der erfindungsgemäßen Wirkung nicht erforderlich, begünstigen aber die Wirtschaftlichkeit der Legierung, da sie die Verwendung billigerer Mischlegierungen als Einsatzmaterialien für die Erschmelzung erlauben.

Das erfindungsgemäße Reinigungsverfahren zeichnet sich dadurch aus, daß es nach dem üblichen Durchlaufverfahren durchgeführt wird, wobei das zu reinigende Gas vorzugsweise in einem Durchlaufreaktor durch eine Pulverschüttung aus der erfindungsgemäßen Metallegierung hindurchgeleitet wird und die Fremdgasbestandteile von dieser Legierung chemiesorbiert werden, während das zu gewinnende Reingas praktisch nicht mit der Legierung reagiert. Die Reaktion mit den Fremdgasbestandteilen ist praktisch irreversibel, so daß die Pulverschüttung je nach Fremdgasbeladung und Anforderung an den Reinheitsgrad der zu reinigenden Sondergase von Zeit zu Zeit ausgetauscht werden muß.

Da sich die bekannten Legierungen, die für die Gasreinigung im Wege der Chemiesorption eingesetzt werden, in bezug auf reaktive Sondergase wie Chlor, Chlorwasserstoff, Silan, Dichlorsilan oder ähnliche Gase als sehr unbeständig erweisen, also mit diesen Gasen rasch reagieren, war es außerordentlich überraschend, daß sich die Legierungen des erfindungsgemäßen Typs völlig anders verhielten und praktisch keine Verbindungen mit diesen "an sich sehr reaktiven" Sondergasen eingingen, sondern nur die sonst nicht oder weniger reaktiven Gaskomponenten chemiesorbierten. Es wurden von ihnen nicht nur Fremdgasbestandteile wie Wasserstoff, Sauerstoff, Kohlenmonoxid, Feuchte ($H_2O$) und Kohlenwasserstoffe aufgenommen, vielmehr wurden sogar inerte Gase wie Stickstoff gebunden.

Die Wirksamkeit der Erfindung wird anhand von zwei Ausführungsbeispielen näher erläutert. In einem ersten Versuch wurde Chlorwasserstoffgas durch einen Durchlaufreaktor geleitet, der mit einer feinkörnigen Schüttung aus einer Legierung mit folgender Zusammensetzung gefüllt war:

| 60 % | Ti |
|------|-----|
| 36 % | Cu |
| 4 % | Ni |

EP 0 443 698 B1

Der Reinigungseffekt ist aus der nachstehend angegebenen tabellarischen Auflistung der im Rohgas und im Reingas enthaltenen Fremdgasbestandteile ersichtlich.

| Fremdgasbestandteile | Rohgas (vpm) | Reingas (vpm) |
|---|---|---|
| Wasserstoff | 667 | 45 |
| Sauerstoff + Argon | 34 | < 2 |
| Stickstoff | 1863 | 126 |
| Kohlenmonoxid | 54 | 20 |
| Feuchte | < 2 | < 2 |
| Kohlenwasserstoffe | < 2 | < 2 |

Während die Gehalte an Feuchtigkeit und Kohlenwasserstoffen im Rohgas bereits unterhalb der Empfindlichkeitsgrenze des verwendeten Gaschromatographen lagen, ergaben sich Reinigungsgrade von über 94 % bei Sauerstoff + Argon, von 93 % bei Wasserstoff, von 93 % bei Stickstoff und 63 % bei Kohlenmonoxid.

In einem zweiten Versuch wurde eine Legierung aus 43 % Ti und 57 % Cu zur Reinigung von Chlorgas verwendet. Dabei ergab die Analyse des Rohgases und des Reingases die folgenden Werte:

| Fremdgasbestandteile | Rohgas (vpm) | Reingas (vpm) |
|---|---|---|
| Wasserstoff | < 20 | < 20 |
| Sauerstoff + Argon | 4500 | 53 |
| Stickstoff | 14600 | 149 |
| Kohlenmonoxid | < 5 | < 5 |
| Kohlendioxid | 660 | 49,5 |
| Kohlenwasserstoffe | < 1 | < 1 |
| Feuchte | < 2 | < 2 |

In diesem Fall betrug der Reinigungsgrad sogar 99 % bei Stickstoff, über 98 % bei Sauerstoff + Argon und 92 % bei Kohlendioxid. Die übrigen Fremdgasbestandteile lagen bereits im Rohgas unter der Empfindlichkeitsgrenze des Meßgerätes. Es kann jedoch davon ausgegangen werden, daß auch diese Fremdgasbestandteile gegenüber ihren von vornherein geringen Ausgangswerten noch weiter reduziert wurden.

**Patentansprüche**

1. Schüttung einer pulverisierten chemiesorptionsfähigen Metallegierung enthaltend Ti und /oder Zr sowie Cu, **dadurch gekennzeichnet,**
daß die Legierung die folgende Zusammensetzung (Gewichts-%) aufweist:
30-70 %     Ti und/oder Zr
30-70 %     Cu
0- 5 %     Fe
0-10 %     Ni
0- 5 %     V
0- 5 %     Cr.

2. Verfahren zur Reinigung eines Gases von Fremdgasbestandteilen, wobei das verunreinigte Gas durch eine Schüttung einer pulverisierten Metallegierung geführt wird und die Metallegierung Fremdgasbestandteile chemiesorbiert,

dadurch gekennzeichnet,
daß zur Reinigung von reaktiven Sondergasen wie Chlor, Chlorwasserstoff, Silan, Dichlorsilan und ähnlichen Gasen als pulverisierte Metaliegierung eine Legierung mit folgender Zusammensetzung verwendet wird:

| 30-70 % | Ti und/oder Zr |
| 30-70 % | Cu |
| 0- 5 % | Fe |
| 0-10 % | Ni |
| 0- 5 % | V |
| 0- 5 % | Cr. |

## Claims

1. A bed of a powdered chemisorptive metal alloy containing Ti and/or Zr and Cu, characterised in that the alloy has the following composition (% by weight):

| 30 - 70% | Ti and/or zr |
| 30 - 70% | Cu |
| 0 - 5% | Fe |
| 0 - 10% | Ni |
| 0 - 5% | V |
| 0 - 5% | Cr. |

2. A method for purifying a gas of foreign gas constituents, in which the contaminated gas is passed through a bed of a powdered metal alloy and the metal alloy chemisorbs foreign gas constituents, characterised in that for the purification of reactive special gases such as chlorine, hydrogen chloride, silane, dichlorosilane and similar gases, an alloy having the following composition

| 30 - 70% | Ti and/or Zr |
| 30 - 70% | Cu |
| 0 - 5% | Fe |
| 0 - 10% | Ni |
| 0 - 5% | V |
| 0 - 5% | Cr. |

is used as the powdered metal alloy.

## Revendications

1. Masse d'un alliage métallique pulvérisé apte à la sorption chimique, contenant Ti et/ou Zr ainsi que Cu, caractérisée en ce que l'alliage présente la composition suivante (pourcentage pondéral) :

| Ti et/ou Zr | 30-70 % |
| Cu | 30-70 % |
| Fe | 0- 5 % |
| Ni | 0-10 % |
| V | 0- 5 % |
| Cr | 0- 5 %. |

2. Procédé pour purifier un gaz de constituants de gaz étranger, le gaz contaminé étant guidé à travers une masse d'un alliage métallique pulvérisé et l'alliage métallique absorbant chimiquement les constituants du gaz étranger,
caractérisé en ce que, pour purifier des gaz spéciaux réactifs, comme du chlore, du gaz hydrochlorique, du silane, du dichlorosilane, et des gaz analogues, on utilise un alliage, sous forme d'alliage métallique pulvérisé, ayant la composition suivante :

| Ti et/ou Zr | 30-70 % |
| Cu | 30-70 % |
| Fe | 0- 5 % |
| Ni | 0-10 % |
| V | 0- 5 % |
| Cr | 0- 5 %. |